# EUROPÄISCHE PATENTSCHRIFT

(11) **EP 0 806 385 B1**
(45) Veröffentlichungstag und Bekanntmachung des Hinweises auf die Patenterteilung: **18.08.1999**
(21) Anmeldenummer: 97107587.4
(22) Anmeldetag: 07.05.1997
(51) Int. Cl.: B65G 47/82, B65B 35/40

(54) **Verfahren und Übergabevorrichtung zum gruppenweisen Abgeben von Gegenständen aus einem Stapelbandförderer**
Method and transfer device for delivering groups of articles from a stacking belt conveyor
Méthode et dispositif de transfert pour délivrer des groupes d'objets d'un transporteur à bande d'empilage

(30) Priorität: 08.05.1996 DE 19618512
(43) Veröffentlichungstag der Anmeldung: 12.11.1997
(73) Patentinhaber: Pactec Verpackungsmaschinen-Fabrik Theegarten GmbH & Co. KG, 01237 Dresden (DE)
(72) Erfinder: Kmoch, Werner, 01237 Dresden (DE); Girndt, Wolfgang, 01705 Freital (DE)
(74) Vertreter: Grünecker, Kinkeldey, Stockmair & Schwanhäusser Anwaltssozietät

(56) Entgegenhaltungen:
- GB-A- 1 260 313
- US-A- 2 651 442
- US-A- 3 269 091
- US-A- 5 176 244

## Beschreibung

Die Erfindung betrifft ein Verfahren zum gruppenweisen Abgeben von Gegenständen aus einem Stapelbandförderer mit den Merkmalen des Oberbegriffes von Patentanspruch 1. Weiterhin betrifft die Erfindung eine Übergabevorrichtung zum gruppenweisen Abgeben von Gegenständen von einem Stapelbandförderer auf eine Weiterfördereinrichtung, insbesondere für Verpackungsmaschinen mit den Merkmalen des Oberbegriffes von Patentanspruch 10.

Bei der Verpackung kleinstückiger Gegenstände, z.B. von Süßwaren wie Bonbons (z.B. Weich- oder Hartkaramellen) ist es bekannt, z.B. zum Einzelverpacken dieser Gegenstände, diese auf der Grundlage eines Rotations-Transportprinzips durch die Verpakkungsmaschine zu bewegen. Hierbei werden z.B. von einem Massestrang abgetrennte Bonbons zunächst von einem Greiferrad ergriffen und unter Rotation desselben an ein mit gleichem Wirkumfang versehenes Übergaberad übergeben, das seinerseits unter Geschwindigkeitsausgleich die Gegenstände an ein Einwickelrad weitergibt (WO-A-93/10005).

Derartige, auf dem "Rotationsprinzip" der Übergabeorgane aufgebaute Verpackungsmaschinen, insbesondere Bonbonverpackungsmaschinen, können im Hochleistungsbereich mit Verpackungsgeschwindigkeiten von bis zu ca. 1.500 Stück pro Minute arbeiten und sind außerordentlich effizient. Bei derartigen Verpackungsmaschinen besteht jedoch auch das Bedürfnis, die entweder noch unverpackten oder aber bereits einzelverpackten Gegenstände auch zu Stangen zu verpacken, woraus die Notwendigkeit entsteht, ein gruppenweises Zusammenführen der zunächst vereinzelten Gegenstände und eine anschließende Bereitstellung an einen Stangenpacker zu organisieren.

Aus der US-A-3 269 091 ist ein Verfahren zum Verpacken von Gruppen von Gegenständen sowie eine entsprechende Übergabevorrichtung hierfür bekannt. Dabei werden kontinuierlich angeförderte Gegenstände gruppenweise unmittelbar in mit einem ebenfalls kontinuierlich betriebenen Förderer antransportierte Verpackungen übertragen. Dieses Übertragungsverfahren ist insgesamt wenig flexibel, da die Größe der Gruppen bereits bei ihrer Ablage auf die entsprechende Fördervorrichtung im Hinblick auf die Größe der mit der anderen Fördervorrichtung antransportieren Verpackungen abgestimmt werden muß. Das Verfahren erfordert zudem einen absoluten Synchronlauf der beiden Förderer.

Weiterhin ist aus der US-A-2 651 442 eine Verpackungsvorrichtung bekannt, bei der mit einem ersten Förderband angeförderte Artikel jeweils in Zweiergruppen in auf einem daneben angeordneten Förderband angeförderte Kartons geschoben werden. Die Größe der verschiebbaren Gruppen hängt hierbei von der Gestaltung des Schuborgans ab, das bei einer Veränderung der Gruppengröße aufwendig ausgetauscht werden muß. Auch dieses Verfahren ist daher, insbesondere im Hinblick auf eine Variation der Gruppengröße, wenig flexibel.

Weiterhin ist aus der US-A-5 172 244 eine Verpackungsvorrichtung bekannt, bei der die Artikel jeweils einzeln in Fächern eines Bandförderers antransportiert und mittels eines quer zur Förderrichtung rotierbaren Rechens in Gruppen ausgeworfen werden können. Aus diesen Ausführungen folgt, daß keine der Entgegenhaltungen auch nur ansatzweise einen Hinweis auf den Gedanken einer Zwischenablage während eines Übergabevorganges enthält, mit welchem Schritt beispielsweise eine einfache Variation der Gruppengröße realisiert oder ein asynchroner Betrieb der ersten und zweiten Fördervorrichtung problemlos ohne technisch aufwendige Umbauten verwirklicht werden kann.

Der Erfindung liegt daher die Aufgabe zugrunde, ein Verfahren und eine Übergabevorrichtung der eingangs genannten Art anzugeben, das bzw. die es gestattet, Gegenstände, die zunächst einzeln gehandhabt und in einem Stapelbandförderer zu Gruppen zusammengefaßt werden, in flexibler Weise an eine, insbesondere intermittierend arbeitende Weiterfördereinrichtung zu übertragen.

Im Hinblick auf das Verfahren wird die vorgenannte Aufgabe durch ein Verfahren mit den Merkmalen des Patentanspruches 1 gelöst.

Durch eine solche Lösung unter Einsatz eines Stapelbandförderers, in dem die diesem einzeln zugeführten Gegenstände zu Gruppen zusammengefaßt werden, ist es möglich, nicht nur mit hoher Arbeitsgeschwindigkeit eine gruppenweise Bereitstellung von Gegenständen für eine Weiterverarbeitung, insbesondere eine intermittierende Weiterverarbeitung und Verpackung zu Stangen, zu gewährleisten, sondern auch in unkomplizierter Weise und ohne "blockieren" eines vorangehenden Einzelverpackungszyklus in Abhängigkeit von einer Prozeßüberwachung der in dem Stapelbandförderer gebildeten Gruppen von Gegenständen fehlerhafte oder unvollständige Gruppen auszusondern, ordnungsgemäße Gruppen aber quer zur Förderrichtung des Stapelbandförderers zur Weiterverarbeitung bereitzustellen. Durch den Zwischenblageschritt kann eine flexible Betriebsweise einfach verwirklicht werden.

Nach einer bevorzugten Ausführungsform des erfindungsgemäßen Verfahrens, werden die Gegenstände einzeln kontinuierlich dem kontinuierlich arbeitenden Stapelbandförderer zugeführt, und es werden Gruppen von Gegenständen nebeneinanderliegend in Packfächern eines Stapelbandes des Stapelbandförderers gebildet und in Laufrichtung des Stapelbandes gefördert, wobei die in einem Packfach befindliche Gruppe von Gegenständen gleichzeitig und im wesentlichen rechtwinklig zur Laufrichtung des Stapelbandes aus diesem herausgeschoben wird.

Eine besonders vorteilhatte Weiterverarbeitung der Gruppen von Gegenständen, z.B. einzelverpackte Weichkaramellen, ist dadurch möglich, daß die aus einem Packfach des Stapelbandes des Stapelbandförderers herausgeschobene Gruppe von Gegenständen zwischengelagert und sodann einer, insbesondere intermittierend arbeitenden, Weiterfördereinrichtung zugefördert wird.

Vorzugsweise erfolgt die Abgabe der Gruppen von Gegenständen in einem im wesentlichen horizontal verlaufenden Förderbereich des Stapelbandförderers und erfolgt das transversale Herausschieben der Gruppen von Gegenständen auf eine horizontal hin- und hergehend bewegbare Zwischenlagervorrichtung, von der aus die Gruppe auf ein intermittierend bewegtes Zuführband, insbesondere eine Zuführkette eines Stangenpakkers, gezogen wird.

In Abhängigkeit von einer Konfiguration der Gegenstände und dem weiteren Verpakkungsziel, kann eine Mehrzahl von Gruppen gemeinsam auf der Zwischenlagervorrichtung zwischengelagert und auch gemeinsam auf die Weiterfördereinrichtung gezogen werden.

Vorzugsweise erfolgt die Aktivierung einer Abfördereinrichtung zum Ausschieben der Gruppen aus Packfächern des Stapelbandförderers in Abhängigkeit von einem Steuersignal, wobei eine Nicht-Aktivierung der Abfördereinrichtung zum Ausfördern von unvollständig gebildeten Gruppen und/oder fehlerhatten Gegenständen in Förderrichtung des Stapelbandförderers erfolgt.

Nach einer bevorzugten Ausführungsform des erfindungsgemäßen Verfahrens werden die Gegenstände einzeln dem Stapelbandförderer von einer kontinuierlich und mit höherer Arbeitsgeschwindigkeit arbeitenden Transportvorrichtung zugeführt, in dem gegenüber der Transportvorrichtung mit geringerer Arbeitsgeschwindigkeit kontinuierlich arbeitenden Stapelbandförderer zu Gruppen nebeneinanderliegender Gegenstände (z.B. Hoch- oder Querformat), zusammengeführt und weitergefördert, sodann abfolgend in Gruppen intermittierend durch eine Querschubvorrichtung transversal aus dem Stapelbandförderer auf eine horizontal in Förderrichtung des Stapelbandförderers bewegbare Zwischenlagereinrichtung abgegeben und von dieser durch eine Querzugvorrichtung auf eine intermittierend arbeitende Weiterfördereinrichtung, insbesondere ein Zuförderband oder eine Zuförderkette zu einem Stangenpacker, gefördert werden.

Hinsichtlich der Vorrichtung wird die vorgenannte Aufgabe durch eine Übergabevorrichtung mit den Merkmalen des Patentanspruches 11 gelöst.

Durch die Anwendung eines Druck-Zug-Förderprinzips für das Ausfördern der in einem Stapelbandförderer gebildeten Gegenstandsgruppen unter Einschaltung einer Depotvorrichtung (Zwischenla-gervorrichtung) und der Aufnahme von dort durch eine Querzugvorrichtung ist eine hohe Flexibilisierung der Verfahrensführung, die Berücksichtigung fehlerhafter Gruppen oder fehlerhafter Gegenstände und die Aussortierung derselben vor der weiteren Verarbeitung, z.B. Stangenverpackung derselben bei hohen Arbeitsgeschwindigkeiten und mit großer Zuverlässigkeit, möglich.

Ferner können auf diese Weise kontinuierlich geförderte Gruppen von Gegenständen im Stapelband, deren Geschwindigkeit je nach Format und Lage der Gegenstände unterschiedlich ist, in eine intermittierend bewegte Zuführkette (oder ein Zuführband) eingebracht werden, verbunden mit der Möglichkeit, unvollständige oder fehlerhafte Gruppen auszusondern.

Eine vorteilhafte Ausführungsform der erfindungsgemäßen Übergabevorrichtung besteht darin, daß der Stapelbandförderer ein Stapelband mit durch Mitnehmer in Verbindung mit einem Gegenlager gebildeten Packfächern zur nebeneinanderliegenden Aufnahme einer Gruppe von Gegenständen aufweist.

Vorzugsweise besitzt die Querschubvorrichtung einen transversal zur Förderrichtung des Stapelbandes des Stapelbandförderers in die Packfächer bewegbaren Ausschieber.

Dieser Ausschieber wird nach noch einer weiteren vorteilhaften Ausführungsform der Erfindung, (die das kontinuierliche Arbeiten des Stapelbandförderers ermöglicht), entlang einer Bewegungskurve steuerbar, die Horizontal- und Vertikalkomponenten aufweist, so daß der Ausschieber eine Eintauchbewegung entlang einer Steuerkurve ausführt, die die Fördergeschwindigkeit des weiterlaufenden Packfaches, in das der Ausschieber zum Ausschieben der Gruppen von Gegenständen eintaucht, berücksichtigt. Vorzugsweise ist dem Ausschieber eine verstellbare Bewegung in Förderrichtung des Stapelbandes verliehen und ist sensorgesteuert ein Stillsetzen zu der Ausschiebefunktion des Ausschiebers möglich.

Eine Breite des Ausschiebers in Förderrichtung des Stapelbandes entspricht im wesentlichen einer Breite einer Gruppe von Gegenständen in Förderrichtung des Stapelbandes, die sich in einem Packfach befindet.

Die Zwischenlagervorrichtung, auf die die Querschubvorrichtung arbeitet, ist vorzugsweise eine parallel zum Stapelband hin- und hergehend bewegbare Zwischenplatte, der die aus dem Packfach des Stapelbandes ausgeförderte Gruppe bzw. eine Mehrzahl von Gruppen von Gegenständen ablegbar ist.

Vorzugsweise wird jede Gruppe in ein durch einen Gegenhalter, der Teil der Weiterfördereinrichtung (Querzugvorrichtung) ist, gebildetes Transportfach auf der Zwischenplatte eingefördert, so daß ein definiertes Bewegungsverhalten für die Gegenstände entlang ihres Förderweges gesichert ist. Die Querzugvorrichtung weist vorzugsweise den Gegenhalter und ein Greiferteil auf, wobei Gegenhalter und Greiferteil zwischen der Weiterfördereinrichtung und der Zwischenplatte und durch einen gemeinsamen Antrieb entlang unterschiedlicher Steuerkurven bewegbar sind, wobei dieser Antrieb vorzugsweise eine Kurbelschwinge, verbunden mit dem Gegenhalter über eine Gegenhalterschwinge und verbunden über eine Steuerkoppel mit dem Greiferteil, aufweist.

Weitere, bevorzugte Ausgestaltungen des Erfindungsgegenstandes sind in den übrigen Unteransprüchen dargelegt. Die Erfindung wird nachstehen anhand eines Ausführungsbeispieles und zugehöriger Zeichnungen näher erläutert. In diesen zeigen:
- Fig. 1: eine Gesamtdarstellung einer Einrichtung zum Verpacken von Bonbonstücken, einschl. einem Ausführungsbeispiel der Übergabevorrichtung,
- Fig. 2: eine Draufsicht auf die Übergabevorrichtung nach dem vorgenannten Ausführungsbeispiel in schematischer Darstellung,
- Fig.3a - 3c: eine Darstellung der Phasen einer Ausförderung einer Gruppe von Gegenständen aus einem Stapelbandförderer zu einer Weiterfördereinrichtung, und
- Fig. 4: eine Querschnittdarstellung der Übergabevorrichtung in schematischer Darstellung.

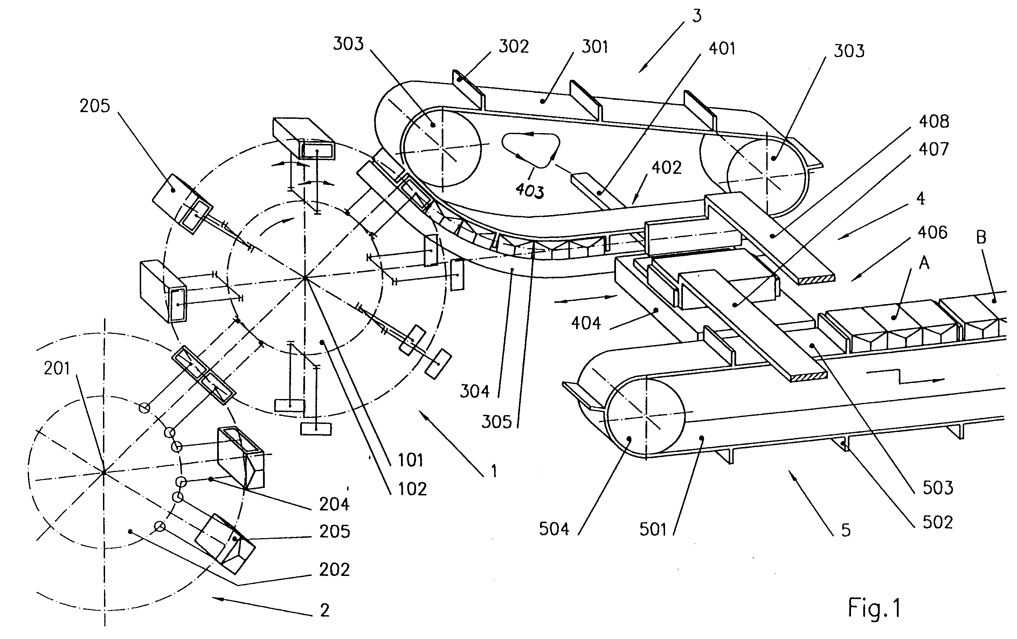

Ein bevorzugtes Ausführungsbeispiel des Verfahrens und der Übergabevorrichtung werden nachfolgend anhand der Fig. 1 - 4 erläutert, wobei in Fig. 1 das Verfahren und die Übergabevorrichtung 4 im Rahmen eines Verpackungsmaschinen-Systems dargestellt sind.

Das Ausführungsbeispiel, das die Vorbereitung von einzelverpackten Bonbons 205 für die Zuführung zu einem - hier nicht dargestellten - Stangenpacker erläutert, ist selbstverständlich nicht auf die Handhabung dieser Art von Gegenständen beschränkt, sondern kann auch auf eine Vielzahl anderer, insbesondere kleinstückiger Gegenstände, die entweder bereits einzeln vorverpackt oder auch unverpackt zu Gruppen versammelt und insbesondere zu Stangen verpackt werden sollen, übertragen werden.

Wie Fig. 1 zeigt, werden von einem Packkopf 2, der eine Viehlzahl von um eine stationäre Achse 201 an einem rotierenden Gehäuse 202 schwenkbarer Packbackenpaare 204 aufweist, einzelverpackte Bonbons 205 einem stromauf eines Stapelbandförderers 3 angeordneten Übergabekopf 1 zugeführt, der die Bonbons 205 durch Haltebackenpaare 104, die schwenkbar an einem um eine stationäre Achse 101 rotierenden Gehäuse 102 gelagert sind, übergeben und zu dem Stapelbandförderer 3 geführt, der tangential in der Umlaufbahn der Bonbons 205 angeordnet ist.

Der Übergabekopf 1 besitzt zugleich die Fähigkeit, die Bonbons in ihrer Lage um 90° zu drehen, so daß sie nicht nur im Flachformat (wie aufgenommen) weitergegeben werden können, sondern auch für eine Hochkantweiterverarbeitung dem Stapelbandförderer 3 zugeführt werden können.

Während der Übergabekopf 1 und der Packkopf 2 im wesentlichen mit einer gleichen z.B. 1.500 Bonbons pro Minute behandelnden Rotationsgeschwindigkeit umlaufen, weist der Stapelbandförderer 3 eine deutliche geringere Arbeitsgeschwindigkeit auf, die vorzugsweise bei maximal ca. 50% der Arbeitsgeschwindigkeit der vorgeschalteten Förderer 1 und 2 liegt (im allgemeinen 1/3 dieser Arbeitsgeschwindigkeit beträgt), und der Bildung Gruppen A, B von Bonbons 205 dient, zur Weiterverpackung zu Stangen.

Zu diesem Zweck weist der Stapelbandförderer 3 ein Stapelband 301 mit Mitnehmern 302 auf, die in Verbindung mit einem Gegenlager 304 Packfächer 305 bilden, in denen im vorliegenden Fall jeweils 3 Bonbons 205 nebeneinanderliegend aufgenommen werden können. Das Stapelband 301 wird über Umlenkwalzen 303 kontinuierlich umlaufend geführt.

Zur Bereitstellung der zu Gruppen zusammengefaßten Bonbons 205, die bereits einzelverpackt sind, an eine Weiterfördereinrichtung 5, die hier durch ein Zuführband 501 gebildet wird, das ähnlich wie das Stapelband 301 durch Mitnehmer 502 einzelne Transportfächer 503 bildet, in denen die zugeführten Gruppen A, B von Bonbons intermittierend abgefördert und z.B. einem Stangenpacker zugeführt werden, dient die Zwischenlagervorrichtung 404.

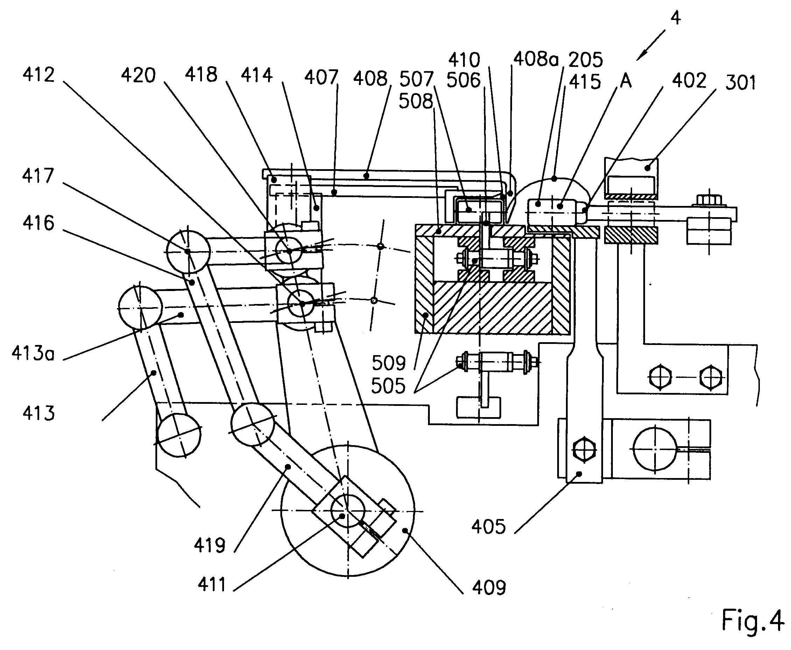

In der schematischen Darstellung nach Fig. 1 ist die Weiterfördereinrichtung 5 als Zuführband 501, umgelenkt um die Umlenkwalze 504, ausgeführt. Im Hinblick auf Stangenpacker wird vielfach jedoch bevorzugt, die Gruppen A, B von Bonbons 205 einer Zuführkette 505 als Weiterfördereinrichtung und Zuführbahn für eine anschließende Verpackung mehrerer Gruppen A, B von Gegenständen zuzuführen, wie dies in Fig. 4 dargestellt ist.

Zur gruppenweisen Bereitstellung der Bonbons 205 (hier in Dreiergruppen) und zur Weiterförderung zu dem Zuführband 501 (Fig. 1) bzw. der Zuführkette 505 (Fig. 4) ist eine Übergabevorrichtung 4 vorgesehen, die im Sinne einer Querförderung zwischen dem Stapelbandförderer 3 und der Weiterfördereinrichtung 5 arbeitet und die nachfolgend genauer erläutert wird.

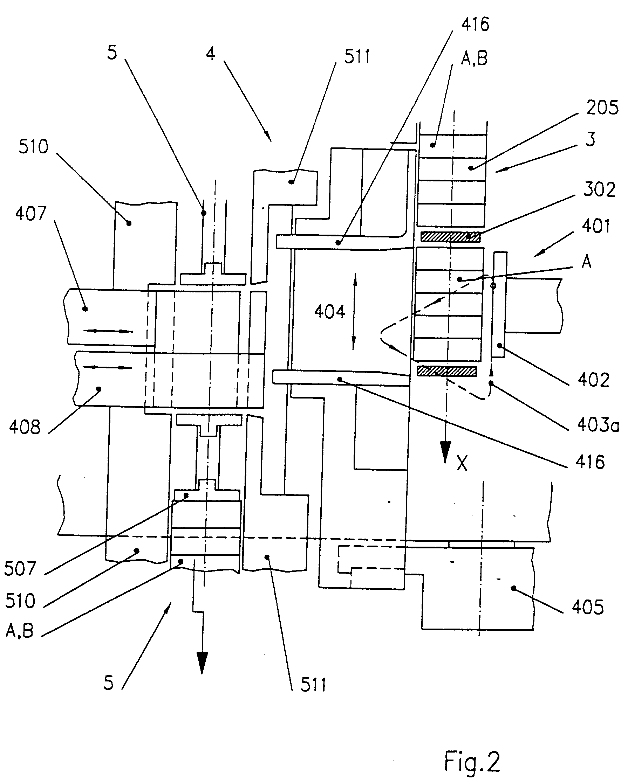

Die Übergabevorrichtung 4 weist eine Querschubvorrichtung 401 mit einem Ausschieber 402, dessen Breite in Förderrichtung des Stapelbandes 301 ca. der Gesamtbreite einer Gruppe A, B von Bonbons 205 entspricht, d.h. etwas geringer ist als der Abstand zwischen zwei abfolgenden Mitnehmern 302 des Stapelbandes 301, so daß der Ausschieber 402 in ein zwischen den Mitnehmern 302 und dem Gegenlager 304 gebildetes Packfach 305 eintauchen und gemeinsam die Gruppe A, B von Bonbons 205 in Querrichtung aus dem Stapelförderer 3 herausfördern kann (s. auch Fig. 2 und 4). Da das Stapelband 301 des Stapelbandförderers 3 kontinuierlich umläuft, muß der Ausschieber 402 eine entsprechend kombinierte, aus Ausstoßlängs- und - querbewegung zusammengesetzter Steuerbewegung ausführen, vorzugsweise im Bereich vor bzw. nach dem Eintauchen auch mit Vertikalbewegungs-Steuerkomponenten kombiniert ist, um ein günstiges Bewegungsverhalten des Ausschiebers 402 zu erhalten. Die Steuerkurve für den Ausschieber 402 ist mit 403 schematisch angedeutet. Die Bewegung des Ausschiebers 402 in der Draufsicht verdeutlicht die unterbrochene Linie 403a in Fig. 2.

Obwohl die Antriebseinrichtung für den Ausschieber 402 hier nicht im einzelnen dargestellt ist, wird vorzugsweise der Ausschieber über ein hydraulisch zwischen einer Arbeits- und einer Nicht-Arbeitsstellung schaltbares, vorzugsweise hydraulisch gesteuertes Kniegelenk angesteuert, so daß der Antrieb des Ausschiebers in Abhängigkeit von einer Beobachtung der Gruppenbildung der Bonbonstücke oder einer Qualitätsbeobachtung der Einzelverpackung der Bonbons 205 stillgesetzt werden kann. Aufgrund des kontinuierlichen Förderprinzips des Stapelbandförderers 3 würden solchermaßen als fehlerhaft oder unvollständig erkannte Gruppen von Bonbons ohne Betätigung des Ausschiebers 402 einfach nach hinten in Förderrichtung des Stapelbandes 301 (Pfeil X in Fig. 2) aus dem Stapelbandförderer 3 herausgeschoben, so daß auf einfache Weise durch die Nicht-Betätigung des Ausschiebers in Verbindung mit dem kontinuierlichen Stapelbandförderer 3 das Aussortieren fehlerhafte Produkte möglich ist, da diese Produkte einen anderen Förderweg nehmen (in Längsrichtung des Stapelbandförderers 3) als die ordnungsgemäßen Gegenstände und Gruppen A, B von Bonbons 205, die quer aus dem Stapelband 301 herausgeschoben werden.

Der Ausschieber 402 arbeitet auf einer Zwischenplatte 404, die entsprechend der Umlaufgeschwindigkeit des Stapelbandes 301 ebenfalls horizontal im Übergabebereich, d.h. im Arbeitsbereich des Ausschiebers 402 mit einer der Geschwindigkeit des Stapelbandes 301 entsprechenden Geschwindigkeit horizontal bewegt wird (die Rückzugsbewegung in die Ausgangslage erfolgt schneller). Eine Antriebsvorrichtung für die Zwischenplatte 404 ist in den schematischen Darstellungen nach Fig. 2 und 4 mit 405 bezeichnet.

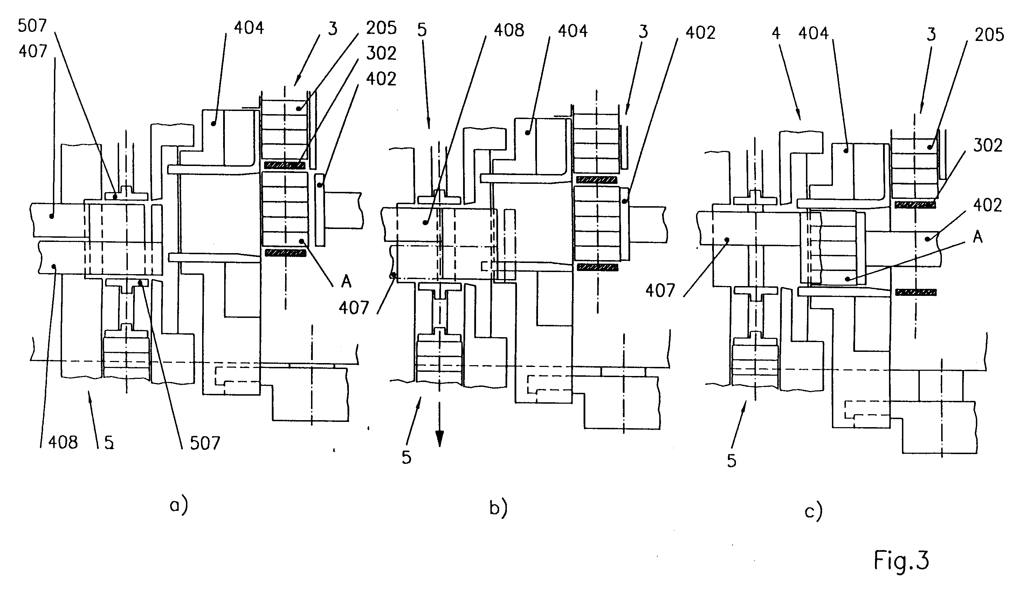

Mit der Zwischenplatte 404 arbeitet zum Übergeben der Gruppe Bonbons 205 gemeinsam auf das Zuführband 501 bzw. die Zuführkette 505 (Fig. 4) eine Querzugvorrichtung 406 zusammen, die zur definierten Übergabe jeder Gruppe A, B von Bonbons 205 einen Gegenhalter 407 und ein Greiferteil 408 aufweist, die durch einen gemeinsamen Antriebshebel 409 (s. Fig. 4) in ihrer Bewegung gesteuert werden und die miteinander, wie in Fig. 4 gezeigt ist, ein Transportfach 410 bilden, in dem sich die jeweilige Gruppe A, B auf der Zwischenplatte 404 befindet, um von dieser dann heruntergezogen und auf das Zuführband 501 oder die Zuführkette 505 gezogen zu werden, wie dies anhand der Fig. 3 und 4 noch erläutert wird.

Das Transportfach 410, das durch den Gegenhalter 407 in Verbindung mit dem Greiferteil 408 auf der Zwischenplatte 404 und stromab derselben gebildet wird, kann auch größer ausgelegt werden, so daß z.B. zwei Gruppen von Bonbons 205 aus dem Stapelbandförderer 3 hintereinander auf die Zwischenplatte 404 durch den Ausschieber 402 ausgeschoben werden und erst dann das Greiferteil 408 hinter die zuletzt ausgeschobene Gruppe greift und die beiden abfolgenden Gruppen dann gemeinsam auf das Zuführband 501 oder die Zuführkette 505 gefördert und mit diesem Zugmittel dann intermittierend schrittweise abgefördert werden.

Der Gegenhalter 407 führt im wesentlichen eine Horizontalbewegung zwischen dem Zuführband 501 bzw. der Zuführkette 505 (Fig. 4) und der Zwischenplatte 404 aus, gesteuert über den gemeinsamen, als Kurbelschwinge ausgeführten Antriebshebel 409, der fest mit einer hier nicht dargestellten Hohlwelle verbunden ist und über ein Drehgelenk 412 eine Gegenhalter-Schwinge 413 bewegt, wobei mit einem Steuerhebel 413a der Gegenhalter-Schwinge 413 ein Halter 414 verbunden ist, der seinerseits fest den Gegenhalter 407 lagert. Ferner ist der Antriebshebel 409 über ein Drehgelenk 420 bewegungsübertragend mit einem Halter 418 des Greiferteiles 408 verbunden, dem eine zusätzliche Greifhubewegung über einen Steuerhebel 419 und eine Steuerkoppel 416 verliehen wird.

Wie in Fig. 4 dargestellt ist, führt insbesondere ein vorderes Greifhakenende 408a des Greiferteiles 408 auf einer Rückkehrbewegung zu der Zwischenplatte 404 eine bogenförmige Bewegung zum Erfassen der nächsten, auf der Zwischenplatte 404 befindlichen Gruppe A aus, wobei diese Bewegungsbahn in Fig. 4 mit 415 bezeichnet ist und ebenfalls einerseits von dem Antriebshebel 409 (Grundbewegung), sowie andererseits von dem Steuerhebel 419, der fest mit einer Welle 411 verbunden ist und der Steuerkoppel 416 um eine Gelenkachse 417 erzeugt und auf den Halter 418 des Greiferteiles 408 übertragen wird. Die Zuführkette 505 zum intermittierenden Zufördern der Gruppen A, B zu einem (hier nicht dargestellten) Stangenpacker weist mit den einzelnen Kettengliedern in üblicher Weise verbundene Mitnehmer 506 auf, die mit Mitnehmerplatten die Transportfächer für die Gruppen A, B der Bonbons 205 auf der Zuführungskette 505 bilden, die in einem Gehäuse 509 aufgenommen ist, dessen Oberplatte 508 eine Transport-Gleitbahn für die Gruppen A, B bildet. Feste Seitenführungen für den Zuführungsförderer 5 sind in Fig. 2 mit 510 und 511 bezeichnet.

Um ein sicheres und zuverlässiges Querverschieben jeder Gruppe A, B durch den Ausstoßer 402 auf die Zwischenplatte 404 sicherzustellen, weist die Zwischenplatte 404 gegenüberliegende, mit einer Einführungsschräge versehene Führungsplatten 416 auf.

Figur 3 verdeutlicht in den Schritten a - c in schematischen Draufsichten jeweils einen Übergabevorgang von dem kontinuierlichen Stapelbandförderer 3 zu dem intermittierend weiterfördernden Kettenförderer 5, wobei in Fig. 3a (Ruhestellung) eine Gruppe A sich auf dem Stapelband 301 des Stapelbandförderers 3 zwischen zwei Mitnehmern 302 in der Stellung befindet, in der der Ausschieber 402 an der Gruppe A angreifen und die Gruppe auf die Zwischenplatte 404 übergeben kann. In dieser Position befindet sich zugleich eine bereits übergebene Gruppe B in dem Transportfach zwischen Gegenhalter 407 und Greiferteil 408 zwischen zwei Mitnehmerplatten 507 des Kettenförderers 5.

In Fig. 3b ist die Zuführkette 505 um einen Schritt weitergeführt worden und der Gegenhalter 407 und das Greiferteil 408 greifen durch einen Leertransportbereich zwischen zwei Mitnehmerplatten 507 hindurch in Richtung auf die Zwischenplatte 404. In Fig. 3c ist gezeigt, wie der Ausschieber 402 die Gruppe A auf die Zwischenplatte 404 und in das hier zunächst durch den Gegenhalter 407 gebildete Transportfach 410 einschiebt. Anschließend wird das Greiferteil 408 mit der Greifernase 408a in einer Hubgreifbewegung über die Gruppe A hinweggreifen und von der gegenüberliegenden Seite zusammen mit dem Gegenhalter 407 die Gruppe auf die Oberplatte 508 des die Zuführkette 505 aufweisenden Kettenförderers verschieben. Das Greiferteil ist in Fig. 3c (da überdeckt von dem Gegenhalter 407) nicht dargestellt.

Für den Fall, daß fehlerhafte Artikel oder Gruppenbildungen erfaßt werden, wird der Ausschieber 402 nicht betätigt und dank der kontinuierlichen Förderung des Stapelbandförderers 3 laufen die fehlerhaften Produkte einfach in Förderrichtung des Stapelbandes 301 von dem Stapelbandförderer 3.

## Patentansprüche

1. Verfahren zum gruppenweisen Abgeben von Gegenständen aus einem Stapelbandförderer, insbesondere für Verpackungsmaschinen, bei dem die Gegenstände (205) in Gruppen (A,B) gleichzeitig quer zu einer Förderrichtung (X) des Stapelbandförderers (3) aus dem umlaufenden Stapelbandförderer (3) herausgeführt werden, **dadurch gekennzeichnet,** daß eine quer herausgeführte Gruppe von Gegenständen (205) in einer Zwischenlagervorrichtung (404) zwischengelagert wird und anschließend von der Zwischenlagervorrichtung (404) zu einer Weiterförderungseinrichtung (5) gefördert wird.

2. Verfahren nach Anspruch 1, **dadurch gekennzeichnet**, daß die Gruppen (A, B) von Gegenständen (205) nebeneinanderliegend in Packfächern (305) eines Stapelbandes (301) in Laufrichtung (X) des Stapelbandes (301) gefördert und die in einem Packfach (305) befindliche Gruppe (A, B) von Gegenständen (205) gleichzeitig im wesentlichen rechtwinklig zur Förderrichtung (X) des Stapelbandes (301) aus diesem herausgeschoben wird.

3. Verfahren nach Anspruch 1 oder 2, **dadurch gekennzeichnet**, daß die Gegenstände zur gruppenweisen Abgabe dem Stapelbandförderer (3) einzeln und kontinuierlich zugeführt, unter Bildung von Gruppen (A, B) von diesem kontinuierlich aufgenommen und weitergefördert und aus dem Stapelbandförderer (3) intermittierend gruppenweise abgeführt werden.

4. Verfahren nach zumindest einem der vorhergehenden Ansprüche 1 bis 3, **dadurch gekennzeichnet**, daß die aus einem Packfach (305) herausgeschobene Gruppe (A, B) von Gegenständen (205) zwischengelagert und sodann zu einer, insbesondere intermittierend arbeitenden Weiterfördereinrichtung (5) zugefördert werden.

5. Verfahren nach zumindest einem der vorhergehenden Ansprüche 1 bis 4, **dadurch gekennzeichnet**, daß die Abgabe der Gruppen (A, B) von Gegenständen (205) in einem im wesentlichen horizontal verlaufenden Förderbereich des Stapelbandförderers (3) erfolgt.

6. Verfahren nach zumindest einem der vorhergehenden Ansprüche 1 bis 5, **dadurch gekennzeichnet**, daß das transversal erfolgende Herausschieben der Gruppe (A, B) auf eine horizontal hin- und hergehend bewegbare Zwischenlagervorrichtung (404) erfolgt, von der aus die Gruppe (A, B) auf einen intermittierend bewegbaren Zuführungsförderer (501, 505) gezogen wird.

7. Verfahren nach zumindest einem der vorhergehenden Ansprüche 1 bis 6, **dadurch gekennzeichnet**, daß eine Mehrzahl von Gruppen gemeinsam auf der Zwischenlagervorrichtung (404) zwischengelagert und gemeinsam auf den Zuführungsförderer (501, 505) gezogen werden.

8. Verfahren nach zumindest einem der vorhergehenden Ansprüche 1 bis 7, **dadurch gekennzeichnet**, daß in Abhängigkeit von einem Steuersignal an eine Abfördereinrichtung (402) zur Abgabe der Gruppen (A, B) aus dem Stapelbandförderer (3) Gruppen von fehlerhaften Gegenständen in Förderrichtung (X) des Stapelbandförderers (3) von diesem ausgefördert werden, unter Stillsetzen der Abfördereinrichtung (402).

9. Verfahren nach zumindest einem der vorhergehenden Ansprüche 1 bis 8, **dadurch gekennzeichnet**, daß die Gegenstände (205) einzeln dem Stapelbandförderer (3) von einer kontinuierlich und mit höherer Arbeitsgeschwindigkeit arbeitenden Transportvorrichtung (1) zugeführt, in dem gegenüber der Transportvorrichtung (1) mit geringerer Arbeitsgeschwindigkeit kontinuierlich arbeitenden Stapelbandförderer (3) zu Gruppen (A, B) nebeneinanderliegender Gegenstände (205) zusammengeführt und weitergefördert, sodann abfolgend in Gruppen (A, B) durch eine Querschubvorrichtung (401) transversal aus dem Stapelbandförderer (3) auf eine horizontal in Förderrichtung des Stapelbandförderers (3) bewegbare Zwischenlagervorrichtung (404) abgegeben und von dieser durch eine Querzugvorrichtung (406) auf eine intermittierend arbeitende Weiterfördereinrichtung (5, 501, 505) gefördert werden.

10. Übergabevorrichtung zum gruppenweisen Abgeben von Gegenständen (205) von einem Stapelbandförderer (3) auf eine Weiterfördereinrichtung (5), insbesondere für Verpackungsmaschinen und zur Durchführung des Verfahrens nach Anspruch 1, **gekennzeichnet durch** eine Querschubvorrichtung (401) zum Ausstoßen einer Gruppe (A, B) von Gegenständen (205) aus einem Packfach (305) des Stapelbandförderers (3) im wesentlichen quer zu einer Förderrichtung (X) des Stapelbandförderers (3) auf eine Zwischenlagervorrichtung (404) und eine Querzugvorrichtung (406) zum Aufnehmen der Gruppe (A, B) von Gegenständen (205) von der Zwischenlagervorrichtung (404) zu der Weiterfördereinrichtung (5).

11. Übergabevorrichtung nach Anspruch 10, **dadurch gekennzeichnet**, daß der Stapelbandförderer (3) ein Stapelband (301) mit durch Mitnehmer (302) in Verbindung mit einem Gegenlager (304) gebildeten Packfächern (305) zur nebeneinanderliegenden Aufnahme von Gegenständen (205) zur Bildung einer Gruppe (A, B) aufweist.

12. Übergabevorrichtung nach Anspruch 10 oder 11, **dadurch gekennzeichnet**, daß die Querschubvorrichtung (401) einen transversal zur Förderrichtung (X) des Stapelbandes (301) in die Packfächer (305) bewegbaren Ausschieber (402) aufweist.

13. Übergabevorrichtung nach Anspruch 12, **dadurch gekennzeichnet**, daß der Ausschieber (402) entlang einer Bewegungskurve (403) steuerbar ist, die Horizontal- und Vertikalkomponenten aufweist.

14. Übergabevorrichtung nach Anspruch 12 oder 13, **dadurch gekennzeichnet**, daß eine Breite des Ausschiebers (402) in Förderrichtung (X) des Stapelbandes (301) im wesentlichen einer Breite einer Gruppe (A, B) von Gegenständen (205) in einem Packfach (305) entspricht.

15. Übergabevorrichtung nach zumindest einem der vorhergehenden Ansprüche 1 bis 14, **dadurch gekennzeichnet**, daß die Zwischenlagervorrichtung eine parallel zum Stapelband (301) hin- und hergehend bewegbare Zwischenplatte (404) ist, auf der die aus dem Packfach (305) des Stapelbandes (301) durch den Ausschieber (402) ausgeförderte Gruppe (A, B) von Gegenständen (205) ablegbar ist.

16. Übergabevorrichtung nach zumindest einem der vorhergehenden Ansprüche 10 bis 15, **dadurch gekennzeichnet**, daß die Querzugvorrichtung (406) einen Gegenhalter (407) und ein Greiferteil (408) aufweist.

17. Übergabevorrichtung nach Anspruch 16, **dadurch gekennzeichnet**, daß der Gegenhalter (407) und das Greiferteil (408) zwischen der Weiterfördereinrichtung (5) und der Zwischenplatte (404) durch eine gemeinsame Antriebsvorrichtung (409) entlang unterschiedlicher Bewegungskurven bewegbar sind.

18. Übergabevorrichtung nach Anspruch 17, **dadurch gekennzeichnet**, daß der Antrieb eine Kurbelschwinge (409), verbunden mit dem Gegenhalter (407) und verbunden mit dem Greiferteil (408) aufweist.

19. Übergabevorrichtung nach Anspruch 18, **dadurch gekennzeichnet**, daß die Kurbelschwinge (409) über Drehgelenke (412, 420) mit Haltern (414, 418) des Gegenhalters (407) und des Greiferteiles (408) bewegungsübertragend verbunden ist und dem Halter (418) des Greiferteiles (408) eine zusätzliche Kurvenbewegung über eine konzentrisch zu einer Antriebswelle der Kurbelschwinge (409) verlaufende Welle (411) und eine Schwenkhebelvorrichtung (419, 416) verliehen ist.

## Claims

1. Method for the delivery of groups of articles from a stacking belt conveyor, in particular for packaging machines, in which method the articles (205) are simultaneously led in groups (A, B) out of the circulating stacking belt conveyor (3) transversely to a conveying direction (X) of the stacking belt conveyor (3), characterised in that a group of articles (205) led out transversely is stored intermediately in an intermediate storage device (404) and subsequently conveyed from the intermediate storage device (404) to an onward conveying equipment (5).

2. Method according to claim 1, characterised in that the groups (A, B) of articles (205) are conveyed in running direction (X) of a stacking belt (301) whilst lying one beside the other in packing compartments (305) of the stacking belt (301) and the group (A, B) of articles (205), which is disposed in one packing compartment (305), is simultaneously pushed out of this substantially at right angles to the conveying direction (X) of the stacking belt (301).

3. Method according to claim 1 or 2, characterised in that the articles are for delivery in groups fed individually and continuously to the stacking belt conveyor (3), are received by this continuously whilst forming groups (A, B) and conveyed onward and led away in groups intermittently out of the stacking belt conveyor (3).

4. Method according to at least one of the preceding claims 1 to 3, characterised in that the group (A, B) of articles (205), which is pushed out of one packing compartment (305), is stored intermediately and then conveyed towards an onward conveying equipment (5) in particular operating intermittently.

5. Method according to at least one of the preceding claims 1 to 4, characterised in that the delivery of the groups (A, B) of articles (205) takes place in the substantially horizontally extending conveying region of the stacking belt conveyor (3).

6. Method according to at least one of the preceding claims 1 to 5, characterised in that the transversely occurring pushing-out of the group (A, B) takes place onto a horizontally reciprocatable intermediate storage device (404), from which the group (A, B) is drawn onto an intermittently movable feed conveyor (501, 505).

7. Method according to at least one of the preceding claims 1 to 6, characterised in that a plurality of groups are intermediately stored in common on the intermediate storage device (404) and together drawn onto the feed conveyor (501, 505).

8. Method according to at least one of the preceding claims 1 to 7, characterised in that in dependence on a control signal to a conveying-away equipment (402) for the delivery of the groups (A, B) out of the stacking belt conveyor (3), groups of faulty articles are conveyed out of the stacking belt conveyor (3) in the conveying direction (X) thereof whilst stopping the conveying-away equipment (402).

9. Method according to at least one of the preceding claims 1 to 8, characterised in that the articles (205) are fed individually to the stacking belt conveyor (3) from a transport device (1), which operates continuously and at a higher operating speed, are guided together into groups (A, B) of articles (205) lying one beside the other and conveyed onwards in the stacking belt conveyor (3) operating continuously at an operating speed lower than that of the transport device (1), then subsequently delivered in groups (A, B) by a transverse thrust device (401) transversely out of the stacking belt conveyor (3) onto an intermediate storage device (404), which is movable horizontally in the conveying direction of the stacking belt conveyor (3), and conveyed from this by a transverse traction device (406) onto an intermittently operating onward conveying equipment (5, 501, 505).

10. Transfer device for the delivery of groups of articles (205) from a stacking belt conveyor (3) onto an onward conveying equipment (5), in particular for packaging machines and for performance of the method according to claim 1, characterised by a transverse thrust device (401) for the ejection of a group (A, B) of articles (205) out of a packing compartment (305) of the stacking belt conveyor (3) substantially transversely to a conveying direction (X) of the stacking belt conveyor (3) onto an intermediate storage device (404) and a transverse traction device (406) for the reception of the group (A, B) of articles (205) from the intermediate storage device (404) to the onward conveying equipment (5).

11. Transfer device according to claim 10, characterised in that the stacking belt conveyor (3) comprises a stacking belt (301) with packing compartments (305), which are formed by entraining members (302) in conjunction with a counterbearing (304), for the reception of articles (305) lying one beside the other for the formation of a group (A, B).

12. Transfer device according to claim 10 or 11, characterised in that the transverse thrust device (401) comprises an ejector (402), which is movable into the packing compartments (305) transversely to the conveying direction (X) of the stacking belt (301).

13. Transfer device according to claim 12, characterised in that the ejector (402) is controllable along a movement curve (403), which has horizontal and vertical components.

14. Transfer device according to claim 12 or 13, characterised in that a width of the ejector (402) in the conveying direction (X) of the stacking belt (301) corresponds substantially with a width of a group (A, B) of articles (205) in a packing compartment (305).

15. Transfer device according to at least one of the preceding claims 10 to 14, characterised in that the intermediate storage device is an intermediate plate (404), which is movable to and fro parallelly to the stacking belt (301) and on which the group (A, B) of articles (205), which has been conveyed out of the packing compartment (305) of the stacking belt (301) by the ejector (402), can be deposited.

16. Transfer device according to at least one of the preceding claims 10 to 15, characterised in that transverse traction device (406) comprises a counterholder (407) and a gripper part (408).

17. Transfer device according to claim 16, characterised in that the counterholder (407) and the gripper part (408) are movable along different movement curves between the onward conveying equipment (5) and the intermediate plate (404) by a common drive device (409).

18. Transfer device according to claim 17, characterised in that the drive comprises a crank pin sheave (409), which is connected with the counterholder (407) and with the gripper part (408).

19. Transfer device according to claim 18, characterised in that the crank pin sheave (409) is connected by way of rotary joints (412; 420) with holders (414, 418) of the counterholder (407) and of the gripper part (408) so as to be transmitting movement and that an additional curved movement is imparted to the holder (418) of the gripper part (408) by way of a pivot lever device (419, 416) and a shaft (411) extending concentrically to a drive shaft of the crank pin sheave (409).

## Revendications

1. Procédé pour délivrer des groupes d'objets d'un transporteur à bande d'empilage, en particulier pour des machines d'emballage, dans lequel les objets (205) sont sortis en groupe (A, B) du transporteur à bande d'empilage (3) tournant simultanément et transversalement à un sens de transport (X) du transporteur à bande d'empilage (3), caractérisé en ce qu'un groupe d'objets sortis transversalement (205) est entreposé dans un dispositif formant palier intermédiaire (404) et est ensuite transporté du dispositif formant palier intermédiaire (404) vers un dispositif de transport ultérieur (5).

2. Procédé selon la revendication 1, caractérisé en ce que les groupes (A, B) d'objets (205) sont transportés l'un à côté de l'autre dans des compartiments d'emballage (305) d'une bande d'empilage (301) dans le sens de marche (X) de la bande d'empilage (301) et en ce que le groupe (A, B) d'objets (205) se trouvant dans un compartiment d'emballage (305) est simultanément poussé de façon essentiellement orthogonale dans le sens de transport (X) de la bande d'empilage (301) hors de celle-ci.

3. Procédé selon la revendication 1 ou 2, caractérisé en ce que les objets sont amenés individuellement et en continu au transporteur à bande d'empilage (3) pour être délivrés de façon groupée, et sont reçus par celui-ci en continu en formant des groupes (A, B) et transportés plus loin et emportés en groupes de façon discontinue du transporteur à bande d'empilage (3).

4. Procédé selon l'une au moins des revendications précédentes 1 à 3, caractérisé en ce que le groupe (A, B) d'objets (205) poussé à l'extérieur d'un compartiment d'emballage (305) est entreposé et est ensuite transporté vers un dispositif de transport (5) ultérieur travaillant notamment de façon discontinue.

5. Procédé selon l'une au moins des revendications précédentes 1 à 4 caractérisé en ce que la délivrance des groupes (A, B) d'objets (205) a lieu dans une zone de transport, passant essentiellement horizontalement, du transporteur à bande d'empilage (3).

6. Procédé selon l'une au moins des revendications précédentes 1 à 5, caractérisé en ce que la poussée à l'extérieur, qui se fait transversalement, du groupe (A, B) a lieu sur un dispositif formant palier intermédiaire (404) pouvant être actionné horizontalement d'un mouvement alternatif, à partir duquel le groupe (A, B) est tiré sur un transporteur d'amenée (501, 505) pouvant se mouvoir de façon discontinue.

7. Procédé selon l'une au moins des revendications précédentes 1 à 6, caractérisé en ce qu'une pluralité de groupes est entreposée ensemble sur le dispositif formant palier intermédiaire (404) et est tirée ensemble sur le transporteur d'amenée (501, 505).

8. Procédé selon l'une au moins des revendications précédentes 1 à 7, caractérisé en ce qu'en fonction d'un signal de commande donné à un dispositif expulseur (402) pour délivrer les groupes (A, B) du transporteur à bande d'empilage (3), des groupes d'objets défectueux sont transportés dans le sens de transport (X) du transporteur à bande d'empilage (3) à l'extérieur de celui-ci, en arrêtant le dispositif expulseur (402).

9. Procédé selon l'une au moins des revendications précédentes 1 à 8, caractérisé en ce que les objets (205) sont amenés individuellement au transporteur à bande d'empilage (3) d'un dispositif de transport (1) fonctionnant en continu et à une vitesse de travail plus élevée, sont réunis en groupes (A, B) d'objets juxtaposés (205) dans le transporteur à bande d'empilage (3), situé en face du dispositif de transport (1) et travaillant en continu et à une vitesse de travail moindre, et sont transportés plus loin, sont ensuite délivrés successivement en groupes (A, B) par un dispositif de poussée transversale (401) transversalement hors du transporteur à bande d'empilage (3) sur un dispositif formant palier intermédiaire (404) mobile horizontalement dans le sens de transport du transporteur à bande d'empilage (3) et sont transportés dudit dispositif formant palier intermédiaire par un dispositif de traction transversale (406) sur un dispositif de transport (5, 501, 505) ultérieur travaillant de façon discontinue.

10. Dispositif de transfert pour délivrer de façon groupée des objets (205) d'un transporteur à bande d'empilage (3) sur un dispositif de transport (5) ultérieur, notamment pour des machines d'emballage et pour réaliser le procédé selon la revendication 1, caractérisé par un dispositif de poussée transversale (401) destiné à éjecter un groupe (A, B) d'objets (205) d'un compartiment d'emballage (305) du transporteur à bande d'empilage (3) essentiellement transversalement à un sens de transport (X) du transporteur à bande d'empilage (3) sur un dispositif formant palier intermédiaire (404) et un dispositif de traction transversale (406) pour la réception du groupe (A, B) d'objets (205) du dispositif formant palier intermédiaire (404) au dispositif de transport (5) ultérieur.

11. Dispositif de transfert selon la revendication 10, caractérisé en ce que le transporteur à bande d'empilage (3) présente une bande d'empilage (301) avec des compartiments d'emballage (305) formés par des tocs d'entraînement (302) en lien avec une butée (304) pour le logement juxtaposé d'objets (205) destinés à former un groupe (A, B).

12. Dispositif de transfert selon la revendication 10 ou 11, caractérisé en ce que le dispositif de poussée transversale (401) présente un dispositif expulseur (402) pouvant se déplacer dans les compartiments d'emballage (305) transversalement au sens de transport (X) de la bande d'empilage (301).

13. Dispositif de transfert selon la revendication 12, caractérisé en ce que le dispositif expulseur (402) peut être commandé le long d'une courbe de mouvement (403), qui présente des composants horizontaux et verticaux.

14. Dispositif de transfert selon la revendication 12 ou 13, caractérisé en ce qu'une largeur du dispositif expulseur (402) correspond dans le sens de transport (X) de la bande d'empilage (301) essentiellement à une largeur d'un groupe (A, B) d'objets (205) dans un compartiment d'emballage (305).

15. Dispositif de transfert selon l'une au moins des revendications précédentes 10 à 14 caractérisé en ce que le dispositif formant palier intermédiaire est une plaque intermédiaire (404) pouvant être actionnée d'un mouvement alternatif parallèlement à la bande d'empilage (301), plaque sur laquelle peut être déposé le groupe (A, B) d'objets (205) extrait du compartiment d'emballage (305) de la bande d'empilage (301) par le dispositif expulseur (402).

16. Dispositif de transfert selon l'une au moins des revendications précédentes 10 à 15, caractérisé en ce que le dispositif de traction transversale (406) présente une contre-bouterolle (407) et une partie à griffes (408).

17. Dispositif de transfert selon la revendication 16, caractérisé en ce que la contre-bouterolle (407) et la partie à griffes (408) peuvent se déplacer entre le dispositif de transport (5) ultérieur et la plaque intermédiaire (404) grâce à un dispositif d'entraînement commun (409) le long de différentes courbes de mouvement.

18. Dispositif de transfert selon la revendication 17, caractérisé en ce que l'entraînement présente un mécanisme à manivelle et belle oscillante (409), relié à la contre-bouterolle (407) et relié à la partie à griffes (408).

19. Dispositif de transfert selon la revendication 18, caractérisé en ce que le mécanisme à manivelle et bielle oscillante (409) est relié par des articulations à charnière (412, 420) à des appuis (414, 418) de la contre-bouterolle (407) et de la partie à griffes (408) en transmettant le mouvement et un mouvement de courbe supplémentaire est conféré à l'appui (418) de la partie à griffes (408) au moyen d'un arbre (411) passant concentriquement à un arbre d'entraînement du mécanisme à manivelle et bielle oscillante (409) et d'un dispositif à levier pivotant (419, 416).
